# EUROPEAN PATENT APPLICATION

(11) **EP 1 454 925 A1**
(43) Date of publication of application: **08.09.2004**
(21) Application number: 03075632.4
(22) Date of filing: 04.03.2003
(51) Int. Cl.: C08F 8/32, D21H 21/16

(54) **Process for preparing an aqueous polymer dispersion, so prepared dispersions and their use**

(71) Applicant: DSM IP Assets B.V., 6411 TE Heerlen (NL)
(72) Inventor: Friederichs, Joseph Petronella, 6019 CC Wessem (NL)
(74) Representative: Krijgsman, Willem

(57) **Abstract**

The invention relates to a process for preparing an aqueous dispersion of a polymer, which polymer is obtained by dispersing a starting polymer containing anhydride monomer units and vinyl aromatic monomer units in an aqueous solution of NH₃ or an amine and subjecting the starting polymer to an imidization reaction in the presence of an alkali salt of an acid functional polymer containing acid functional monomer units and vinyl aromatic monomer units with a temperature at which and a time period during which the reaction is carried out being so chosen that at least 80% imidization, relative to the anhydride monomers in the starting polymer, is achieved.

The invention also relates to an aqueous dispersion of a polymer containing anhydride monomer units and vinyl aromatic monomer units, characterized in that the anhydride monomer units are for at least 80% imidized and the dispersion has a solids content of more than 30 wt %.

## Description

The invention relates to a process for preparing an aqueous dispersion of a polymer, which polymer is obtained by dispersing or dissolving a starting polymer containing anhydride monomer units and vinyl aromatic monomer units in an aqueous solution of NH₃ or an amine and subjecting the starting polymer to an imidization reaction.

Such a process is known from EP-A-1060197. EP-A-1060197 describes a process wherein a styrene maleic anhydride copolymer (SMA) is dissolved in ammonia, with a ratio of ammonia to maleic anhydride (MA) being equal to or greater than 2:1. In this process SMA is not more than 75 % imidized. EP-A-1060197 also includes a comparative example of a polymer dispersion prepared according DE-A-1720746. DE-A-1720746 describes an aqueous dispersion of a polymer obtained by subjecting an SMA to an imidization reaction in an aqueous solution of NH₃ at a temperature above 120°C. According DE-A-1720746 the resulting polymer dispersion contains no more, or virtually no more, maleic anhydride. The degree of imidization in the examples of is not revealed. In the comparative example of EP-A-1060197 made according to DE-A-1720746 the SMA is 89% imidized. It has been observed that a dispersion with such a high degree of imidization has a very wide particle size distribution and that complete imidization in this process leads to the formation of an unstable dispersion, forming a sediment already after standing for a short period.

A polymer dispersion as according to EP-A-1060197 can be applied as a coating for substrates, such as paper. A coater is used in applying the dispersion onto paper. A drawback of the known dispersion is that during drying and calandering the particles fuse, resulting in film formation. Such film formation prevents rapid removal of a solvent when the paper is subjected to a printing process employing a dissolved ink or an ink based on a colorant dispersed in the solvent.

The object of the invention is to provide a process for preparing a dispersion suitable for paper coating that shows a more rapid removal of the solvent and thereby faster drying of the printed substrate compared to the dispersion according to the known process.

This object is achieved by the process wherein the reaction is carried out in the presence of an alkali salt of an acid functional polymer containing acid functional monomer units and vinyl aromatic monomer units with a temperature at which and a time period during which the reaction is carried out being so chosen that at least 80% imidization, relative to the anhydride monomers in the starting polymer, is achieved.

In this manner there is provided a dispersion that exhibits less film formation and better retention of the structure of the particles during paper coating processes than the dispersion according to the known process. The advantage of a paper coating prepared with this dispersion is that it is microporous so that ink solvents and dispersants can be removed rapidly. A further advantage of the inventive process is that it allows the preparation of dispersions with complete imidization and good stability, having a narrower particle size than dispersions with a high imidization degree prepared according to the known process.

In the context of the invention a polymer dispersion is understood to be a composition comprising a continuous liquid phase and a polymer phase finely dispersed in said continuous liquid phase in the form of fine particles. In line herewith, a polymer in a dispersed state is understood here and hereafter to be the situation wherein the polymer is divided in the form of small particles, separated from each other by the continuous liquid phase. Generally the average particle size of the polymer particles in the polymer dispersion according to the invention is between 1 µm and 10 nm. The average particle size can also be larger than 1 µm as well as smaller than 10 nm.

The starting polymer with which the dispersion is prepared contains anhydride functional monomer units and vinyl aromatic monomer units. Suitable polymers that can be used as the starting polymer in the process according to the invention may be any vinyl aromatic polymer containing monomer units bearing anhydride functional groups and which polymer can be dissolved or dispersed, either by itself or upon neutralisation with ammonia or an amine, hereafter together referred to as R-NH₂ in aqueous medium, and which anhydride functional groups can react with the same R-NH₂ to form an imide group.

Generally, the starting polymer is a thermoplastic anhydride functional addition polymer, obtainable by copolymerisation of anhydride functional monomers, aromatic vinyl monomers and optionally other vinyl monomers.

Suitable vinyl aromatic monomers that can be used in the starting polymer are, for example, styrene, α-methyl styrene, vinyl toluene, and indene. The starting polymer preferably contains styrene monomer units.

Suitable anhydride functional monomers that can be used in the starting polymer are, for example, α-β-unsaturated dicarboxylic anhydrides, such as maleic anhydride, citraconic anhydride, and itaconic anhydride. The starting polymer preferably contains maleic anhydride monomer units

Suitable other vinyl monomers, that optionally can be used in the starting polymer are, for example, mono-olefinic unsaturated hydrocarbons, α-β-unsaturated carboxylic esters, halogenated olefins, and mixtures thereof.

Suitable mono-olefinic unsaturated hydrocarbons, are for example, unsaturated hydrocarbons with 2-12 C-atoms, such as ethylene, propylene, isobutylene, and isobutylene.

Suitable α-β-unsaturated carboxylic esters are, for example, acrylate esters (like ethylacrylate, butylacrylate and 2-ethylhexylacrylate), methacrylate esters (like methylmethacrylate and ethylmethacrylate, 2-hydroxyethylmethacrylate), and maleate diesters (like dioctylmaleate).

Suitable halogenated olefins are, for example, vinyl chloride and vinylidene chloride.

Preferably, the starting polymer comprises at most 20 mole % of other vinyl monomers, relative to the total of anhydride functional monomers, aromatic vinyl monomers and other vinyl monomers, more preferably at most 10 mole %, and even more preferably at most 5 mole % of other vinyl monomers. An advantage of a lower mole % of other vinyl monomers is that the polymer has a better thermal stability and can be processed at a higher temperature, thereby enabling the process to be carried out in a shorter time. A further advantage is that the resulting dispersion shows an even better particle integrity in a paper coating application process.

More preferably, the starting polymer is a copolymer of an α-β-unsaturated dicarboxylic anhydride and an aromatic vinyl monomer. The advantage is that the effects mentioned here above are even more enhanced. A further advantage is that the dispersions have even better stability at the very high processing temperatures that have to be applied for obtaining a very high degree of imidization.

The starting polymer preferably contains at least 10 mol%, more preferably at least 15 mol%, even more preferably at least 20 mol% unsaturated dicarboxylic anhydride monomer units, relative to the total of monomer units in the starting polymer. The higher the content in an anhydride of an α-β-unsaturated dicarboxylic acid, the higher is the content of imide groups in the polymer dispersions that can be obtained.

In a preferred embodiment the starting polymer is a copolymer of an α-β-unsaturated dicarboxylic anhydride and an aromatic vinyl monomer containing 22-36 mol% of α-β-unsaturated dicarboxylic anhydride monomer units and 64-78 mol% of aromatic vinyl monomer units. Imidization with such a polymer proceeds fairly rapidly. More preferably, imidization is proceeded to completion. In that case a dispersion can be obtained of a polymer having a glass transition temperature higher than 160°C.

The molecular mass of the starting polymer may vary between wide limits. The starting polymer generally has a mass-average molecular mass (M_{w}) of between 10,000 and 300,000 g/mol, though a M_{w} as low as 5.000 g/mol or even lower may also be used or an M_{w} higher than 300.000 g/mol may also be used.

Preferably, the M_{w} is lower than 200,000 g/mol, more preferably lower than 150.000 g/mol, and even more preferably lower than 100.000 g/mol. A low M_{w} is advantageous since it generally requires less energy input and/or a lower process temperature for converting the starting polymer into a polymer dispersion. In this way also dispersions with a relative high solid substance content can be obtained while the viscosity during the process remains relatively low.

Preferably, the starting polymer has a M_{w} of at least 20,000 g/mol, more preferably at least 40,000 g/mol, and most preferably at least 60,000 g/mol. The advantage of a higher M_{w} is that the Tg of the polymer in the resulting polymer dispersion is higher. Above a certain M_{w}, depending on the type of starting polymer, this effect levels off.

Ammonia and the amine are generally used in the form of a solution in water. The R group in the R-NH₂ products that are suitable for use in the process according to the invention are, for example, H, C₁-C₁₈ alkyl groups and C₆-C₁₈ aryl or arylalkyl groups. It is preferable to use ammonia or an aliphatic amine, which aliphatic amine is a primary amine. Examples of suitable amines are butyl amine and stearylamine. More preferably, R is H or a C₁-C₄ alkyl group, even more preferably R = hydrogen. The advantage of R = hydrogen is that a polymer dispersion is obtained that even better retains the particles integrity upon film formation in a coating process.

To achieve a degree of imidization of at least 80%, R-NH₂ is used in an amount, corresponding with a molar ratio relative to the molar amount of anhydride functional groups in the starting polymer, of at least 0.8. Generally, R-NH₂ is used in a molar ratio relative to the molar amount of anhydride functional groups between 0.8 and 2, preferably between 0.8 and 1.5, more preferably between 0.9 and still more preferably between 1 and 1.5. A higher molar ratio allows the imidization to proceed faster, and a higher degree of imidization, the effect of which is that the resulting dispersion better retains its particles integrity in a paper coating process.

In another preferred embodiment the ratio is at most 1. A lower maximum ratio allows preparation of a dispersion with a lower residual R-NH₂ content, and a lower pH, which is advantageous when the dispersion is used in a paper coating.

More preferably R-NH₂ is fully consumed in the imidization reaction. This has the advantage that the dispersion resulting is absent from obnoxious odour.

Most preferably the ratio is 1. Complete imidization does not take place at a ratio lower than 1.

The acid functional polymer that can be used in the form of an alkali salt in the process according to the invention may be based on any type of polymer containing acid functional monomer units and vinyl aromatic monomer units wherein the amount of acid functional monomer units is such that the acid functional polymer can be dispersed or dissolved in water upon neutralisation of at least part of the acid functional groups with an alkali hydroxide as neutralizing agent, and which polymer, in the form of its alkali salt, is capable, when used in an effective amount, of stabilizing the dispersion formed in said process.

Suitable acid functional monomers are, for example, carboxylic acid functional monomers, sulphonic acid functional monomers and mixtures thereof.

Suitable acid functional polymers are, for example, thermoplastic addition copolymers of vinyl aromatic monomers, acid functional monomers and optionally other vinyl monomers.

Suitable vinyl aromatic monomers that can be used in the acid functional polymer are, for example, styrene, α-methyl styrene, vinyl toluene, indene and mixtures thereof. The acid functional polymer preferably contains styrene monomer units.

Suitable carboxylic acid functional monomers are, for example ethylenically unsaturated mono-carboxylic acids and ethylenically unsaturated dicarboxylic acids. In the context of the invention ethylenically unsaturated dicarboxylic acids are understood to include the cyclic anhydrides of these dicarboxylic acids and half esters thereof.

Suitable ethylenically unsaturated mono-carboxylic acids are, for example, acrylic acid and methacrylic acid.

Suitable ethylenically unsaturated di-carboxylic acids include α-β-unsaturated dicarboxylic acid (such as maleic acid, fumaric acid, citraconic acid, and itaconic acid) and anhydrides and half esters thereof.

A suitable sulphonic acid functional monomer is, for example, styrene sulphonic acid.

Suitable other vinyl monomers, that optionally can be used in the acid functional polymer are, for example, mono-olefinic unsaturated hydrocarbons, α-β-unsaturated carboxylic esters, halogenated olefins, and mixtures thereof. Examples of suitable vinyl monomers are the same as given above.

Preferably, the acid functional polymer comprises at most 20 mol % of other vinyl monomers, relative to the total of acid functional monomers, aromatic vinyl monomers and other vinyl monomers, more preferably at most 10 mole %, and even more preferably at most 5 mole % of other vinyl monomers. An advantage of a lower mole % of other vinyl monomers is that the process can be carried at a higher temperature, thereby enabling a shorter processing time, and/or a higher degree of imidization. A further advantage is that the resulting dispersions have a better thermal stability.

Very advantageously, the acid functional polymer is a copolymer of vinyl aromatic monomers and α-β-unsaturated dicarboxylic acid monomers, or the anhydride thereof. The advantage is that even higher processing temperatures can be used, and an even higher degree of imidization can be obtained while maintaining the good thermal stability of the polymer dispersion prepared by said process. A further advantage is that the resulting dispersion shows an even better particle integrity in a paper coating application process.

Most preferably, the acid functional polymer is a copolymer prepared from maleic anhydride and styrene (SMA). The advantage is that such copolymers are industrially available.

Acid functional polymers, suitable for use in the process according to the invention can be prepared with the aid of known processes, for example with the process for the preparation of a copolymer of maleic anhydride and styrene described by Hanson and Zimmerman, Ind. Eng. Chem., vol. 49, No. 11 (1957), pp.1803-1807.

The amount of acid functional groups in the acid functional polymer can vary within a wide range. Generally, the acid functional polymer has an acid functionality, expressed as the millimolar equivalence of acid functional groups, relative to the weight of acid functional polymer in grams (meq/g), of between 2 and 12 meq/g. An acid functionality above 12 meq/g may give rise to viscous solutions and insufficient stability of the resulting dispersion, and an acid functionality below 2 meq/g may prevent conversion of the starting polymer into a stable polymer dispersion with a imidization degree of at least 80%. The limits of the content, however, also depend on the neutralisation rate in alkali salt of the acid functional polymer. Acid functional polymers with an acid functionality of less than 2 meq/g are not excluded from the invention, but generally have to be used in a much higher amount relative to the starting polymer, to be effective. Also acid functional polymers with an acid functionality of above 12 meq/g may be used. Generally, such polymers have to be used with a neutralization rate lower than 100% to be effective.

In a preferred embodiment the acid functional polymer contains 3-12 meq/g of acid functional groups. More preferably, this content is between 4 and 12 meq/g, even more preferably between 6 and 12 meq/g.

The advantage of a higher minimum amount of acid functional groups is that the acid functional polymer can be used in lower amounts for obtaining a dispersion with a small particle size.

In a preferred embodiment of the inventive process, the alkali salt of acid functional polymer is an alkali salt of a copolymer of styrene and maleic anhydride (SMA) with a maleic anhydride (MA) content of at least 20 mol%, more preferably at least 30 mol %. The advantage of this more preferred embodiment, is that thermally stable dispersion with smaller particles can be prepared, and the process can be performed at higher temperature.

The alkali salt of the acid functional polymer that can be used in the process according to the invention can be a lithium salt, a sodium salt or an potassium salt. Preferably the alkali salt is a potassium salt.

A neutralisation rate of the alkali salt of the acid functional polymer, expressed as the molar ratio of alkali ions versus the total of neutralised and non-neutralised acid groups in the carboxyl acid functional polymer, may vary widely, but preferably is 0.5 - 1. A neutralisation rate in excess of 1 may be used, but should be kept limited in order not to detract from the advantages of the invention. A neutralisation rate of less than 0.5 may be used as well, in particular in combination with an acid functional polymer with a very high content in acid functional monomer.

More preferably the neutralization rate is 0,75 - 1, and most preferably the neutralization rate is 1 or nearly so. The advantage of a higher neutralization rate is that an acid functional polymer with a lower content of acid groups can be used for having the same amount of neutralized acid groups and/or the more effective the acid functional polymer is in the inventive process, allowing the acid functional polymer to be used in a lower amount relative to the starting polymer.

The mass average molecular mass, M_{w}, of the acid functional polymer can vary over a large range and generally is between 500 and 150.000 g/mol. Preferably, the M_{w} is at most 100.000 g/mol, more preferably at most 50.000 g/mol, even more preferably at most 20.000 g/mol, still more preferably 10.000 g/mol and most preferably approx. 1000 g/mol. An advantage of an acid functional polymer with a lower molecular weight is that solutions containing such polymers have a lower viscosity and are easier to handle when used in the process according to the invention. A further advantage is that use of such an acid functional polymer in the process according to the invention allows the formation of dispersions with smaller average particle size.

A preferred embodiment of the invention relates to a process for preparing an aqueous dispersion of a polymer, which polymer is obtained by dissolving a starting polymer containing maleic anhydride (MA) monomer units and vinyl aromatic monomer units in an aqueous solution of NH₃ or an amine and subjecting this solution to an imidization reaction wherein the reaction is carried out in the presence of an alkali salt of styrene maleic anhydride copolymer with a molecular mass of from 500 to 10,000 g/mol, more preferably 1000 g/mol, an MA content of more than 30 mol %, with the temperature at which and the period during which the reaction is carried out being so chosen that complete imidization is achieved.

An advantage of this preferred embodiment is that it enables a dispersion to be made with a solids content of more than 30 wt.% and even more than 40 wt.%. A further advantage is that it enables a dispersion to be made with particles, the average particle size of which is smaller than the wavelength of visible light. The average particle size generally is between 20 and 400 nm. In this manner there is provided a dispersion that can be applied as a coating for paper, on which it can serve as a high-gloss topcoat.

In the process according to the invention generally water is used, thereby forming an aqueous liquid phase. This aqueous phase, however, may also comprise, next to water, organic solvents miscible with water, and/or other components soluble in water or in the mixture of water and organic solvent or organic solvents, as long as these organic solvents and other components don't interfere, or not significantly so, with the conversion of the starting polymer into the polymer dispersion or with the stabilization of said polymer dispersion. Such organic solvents and other components, which are considered inert for the process according to the invention, are generally used in minor amounts, if any at all, or can be removed during or after the process by distillation.

Suitable solvents are, for example, acetone, methylethylketone and cyclohexanone.

Preferably, the amount of water in the aqueous phase is at least 75 wt.% relative to the total weight of the aqueous phase, more preferably at least 90 wt.% relative to the aqueous phase. Most preferably, water is used as the aqueous phase.

The aqueous phase may also comprise an emulsifier. An emulsifier may help in dispersing the starting polymer and in converting the starting polymer into the polymer dispersion as according to the process of the invention and/or in stabilizing said dispersion. Suitable emulsifiers may be anionic surfactants and nonionic surfactants.

Suitable anionic surfactants are, for example, alkaly metal salts of alkyl-and alkylaryl- sulfonates, [such as the sodium salts of (C₁₀-C₁₃) alkylbenzene sulphonic acids], metal salts of alkyl- and alkylaryl-sulfates, alkyl-and alkylaryl phosphates, and alkylammonium salts [such as stearyldimethylbenzylammonium chloride].

Suitable nonionic surfactants are, for example, polyethylene oxide adducts such as polyethyleneoxide-polypropyleneoxide block-copolymers and polyethylene oxide adducts of long chain aliphatic and aliphatic-aromatic alcohols.

Metal salts of alkyl- and alkylaryl- sulfonates and alkylammonium salts are preferred because these emulsifiers are less sensitive to hydrolysis and are more effective at elevated temperature.

Preferably, the aqueous phase does not contain an emulsifier and the inventive process is carried out as an emulsifier free process. The advantage is that the dispersion obtained with the process according to this embodiment of the invention shows a reduced tendency to stabilise any foam when used for example in a paper sizing. A further advantage is that the polymer particles better keep their integrity in a paper coating processes. Furthermore, the coatings prepared from said dispersion are less water sensitive and the use of this composition for paper sizing result in paper with better inkjet-printing properties for example with respect to wicking, bleeding and blackness.

In the process according to the invention, the acid functional polymer can be used in an amount, in which the weight ratio of the acid functional polymer relative to the starting polymer, can vary over a wide range. Generally, the ratio varies between 0.005:1 and 0.10:1. The acid functional polymer may be used in a ratio, relative to the starting polymer, lower than 0.005:1 or higher than 0.10:1. Preferably, the ratio is between 0.01 and 0.05.

A ratio of at least 0.005:1 is advantageously applied for preparing a dispersion with smaller particle size.

A ratio of at most 0.10:1 is advantageously applied for preparing a dispersion with a higher solid contents. The minimum amount at which the acid functional polymer is still effective as well as the optimum amount, depending on the particle size and/or solid contents desired, can in principle be determined experimentally by a person skilled in the art through systematic trials.

The starting polymer and alkali salt of the acid functional polymer are generally used in such an amount, relative to the amount of water, that a dispersion with a solid content of 10-50 wt. % or even higher is obtained. More preferably, the solid content is at least 25 wt.%, even more preferably at least 30% by weight, still more preferably at least 40 wt. %.

The process according to the invention is generally carried out by first forming a mixture of water, the starting polymer, the alkali salt of the acid functional polymer and ammonia or amine. The mixture may be formed by mixing the starting polymer with water, which may or may not contain an emulsifying agent. The water with the starting polymer is mixed may comprise ammonia or an amine and/or the alkali salt of the acid functional polymer. Ammonia or an amine and/or the alkali salt of the acid functional polymer may also be added to the water after the starting polymer is mixed with the water. Ammonia and the amine are generally added in the form of a solution in water. The thus formed mixture of the starting polymer, water, ammonia or amine and the alkali salt of the acid functional polymer is then heated under stirring to the selected reaction temperature and kept at that temperature under stirring for the time period necessary for obtaining the desired degree of imidization.

The process according to the invention for converting the starting polymer into a polymer dispersion can be carried out under any process conditions suitable for said process. The process is generally carried out at elevated temperature (i.e. above room temperature), for example, above the boiling point of the aqueous phase under atmospheric pressure and up to 200°C. If the process temperature is above the boiling point of the aqueous phase under atmospheric pressure, the process is generally carried out under elevated pressure, relative to atmospheric pressure.

Preferably the process is carried out at a temperature above the Tg of the starting polymer. If the starting polymer has a melting temperature, the process is preferably carried out at a temperature above said melting temperature.

The conversion is preferably carried out at a temperature between 120°C and 180°C.

In case the acid functional polymer is an SMA-copolymer, the process is preferably carried out at a temperature above 140°C, still more preferably above 160°C. A higher reaction temperature generally results in higher conversion rates in shorter reaction times. The advantage of a higher process temperature is that conversion requires less input of mechanical energy and that a polymer dispersion with smaller particle size can be obtained. Furthermore, polymers with a higher degree of imidization can be obtained.

In another preferred embodiment of the process, the temperature is between 150 and 160°C, because at that temperature there can be obtained a dispersion that is well defined in terms of properties and composition and with high reproducibility.

The time needed for achieving the desired degree of imidization up to virtually complete imidization of the anhydride monomer units in the starting polymer depends on the chosen temperature, pressure, the reactor, the starting amounts, and the like, and can readily be determined by experiments. The imidization reaction can be stopped or at least heavily retarded by reducing the process temperature to less than 95°C, more preferably below 50°C.

In the process comprising according to the invention, the starting polymer, together with the aqueous solution of NH₃ or amine and the alkali salt of the carboxyl acid functional polymer may be introduced into a suitable reactor, with the temperature being at least 120°C, with the pressure being so high that the aqueous solution cannot boil.

The process of conversion of a starting polymer into a dispersed state according to the invention may be performed in any apparatus, suitable for that purpose known to the man skilled in the art. The process according to the invention can be carried out in reactors and vessels of many different types. Generally, the apparatus is fitted with means for stirring, or comprises other means for applying shear forces upon the starting polymer to be dispersed. If the process is carried out at a temperature above the boiling point of the aqueous phase, the process may generally be carried out in a pressure apparatus.

Suitable apparatus are, for example, continuous stirred tank reactors, kneaders (like a Brabender kneader), and high shear mixing apparatus (such as an extruder). Suitable apparatus that can be used for the process to be carried out under pressure are, for example, autoclaves or extruders with a pressure section. Preferably, the apparatus is an extruder. The advantage of an extruder is that high processing temperatures can be applied, that polymers with high Tg and/or melting temperature can be processed at high throughput rates, and that polymer dispersions with high polymer content and/or high viscosities can easily be processed.

The invention also relates to an aqueous dispersion of a polymer containing imide functional groups, vinyl aromatic monomer units, and optionally anhydride monomer units, characterized in that the ratio of imide functional groups to anhydride monomer units is at least 9 :1. This aqueous dispersion has the advantage according to the invention described above.

The invention also relates to an aqueous dispersion of a polymer containing imide functional groups, vinyl aromatic monomer units, and optionally anhydride monomer units, characterized in that the ratio of imide functional groups to anhydride monomer units is at least 4:1 and the dispersion has a solids content of at least 30 wt %. Such a dispersion presents the advantage that, after being applied onto paper, it dries rapidly and does not exhibit any splitting. No or relatively little misting arises during application in film press applications. A further advantage of the dispersion according to the invention is that it has a relatively narrow particle size distribution.

The dispersions according to the invention are obtainable by the process according to the invention.

Preferably the dispersion has a solids content of at least 35 wt.%, more preferably 40 wt.%. A higher solid content has the advantage that a paper coating with a higher solid content can be prepared and drying of the paper coating in a paper coating process can be accomplished in a shorter time.

The ratio of imide functional groups to anhydride monomer units preferably is at least 9:1, more preferably at least 99:1. The advantage of a higher ratio of imide functional groups to anhydride monomer units is that a paper coating process wherein a paper coating comprising the dispersion is applied, can be carried out at higher processing speed with retention of the faster water removal properties of the resulting coating.

In a preferred mode of the invention, the aqueous dispersion is an aqueous dispersion of a polymer containing maleic anhydride (MA) monomer units and vinyl aromatic monomer units, wherein the MA is virtually completely imidized and the dispersion has a solids content of more than 30 wt.%, preferably more than 40 wt.%.

The aqueous dispersion preferably contains a polymer whose vinyl aromatic monomer units are styrene and whose glass transition temperature is higher than 160°C, more preferably 180 °C.

The invention also relates to compositions for paper sizing and paper coating formulations that contain the dispersion according to the invention, and to film press applications of these formulations.

Compositions for paper sizing and paper coating contain besides a dispersion obtainable by the process according to the invention one or more customary additives. The composition according to the invention is preferably characterized in that the composition may contain additives such as starch, polyvinyl alcohol, hyperbranched polyester amides, latexes or other binders. These serve to prevent a coating prepared with the dispersion according to the invention from exhibiting tears.

The amount of dispersion contained in the composition preferably is such that the amount of polymer, that is, the dry weight of polymer particles in the dispersion, is between 0.1 and 100 wt.% relative to total dry weight. A composition for paper sizing more preferably contains between 90 and 95 wt.% dry weight of polymer particles relative to total dry weight. A composition may be prepared by, for example, adding a certain amount of the dispersion according to the invention to a solution of the other additives in water.

The invention also relates to paper provided with a paper sizing or paper coating according to the invention.

The invention will now be elucidated with reference to the examples without being limited thereto.

### EXAMPLES AND COMPARATIVE EXPERIMENTS

### Characterization techniques

### PCS measurements

The mean hydrodynamic radius of the polymer particles was determined by Photon Correlation Spectroscopy (PCS). Measurements were made with a set-up from ALV-Laser Vertriebsgesellschaft mbH, of Langen, Germany (Coherent Innova 90 ion-argon laser, using the blue line (488 nm), power 50 mW). The signal was received with the aid of a Thorn-Emi photon multiplier mounted on an ALV/SP-86#053 laser goniometer (photon multiplier supply voltage about 1700 V, measuring angle 90°). The signal was processed by an ALV 5000 Multiple Tau digital correlator equipped with the ALV5000/E for Windows software. The cumulants analysis method was used for processing the measured data and the Stokes-Einstein relationship was used for determining a hydrodynamic radius from the measured diffusion coefficient.

For the PCS measurement the samples were diluted in demineralized water that had been filtered by a filter with filter openings of 0.2 µm in diameter. The samples obtained after conducting a process according to the invention were diluted 500 times (to a concentration of approx. 0.04 wt.% solids or lower), and the samples obtained after conducting a comparative experiment were diluted 50 times, to approx. 0.4 wt.% solids.

Prior to the measurements, the measuring cell was rinsed with particulate-free water and then three times with the sample solution to be measured. A number of samples, from the comparative experiments, were not stable in water. These samples were stabilized using a buffer with pH 9 ± 0.02 (Titrisol of Merck) or a 10⁻³ M aqueous NaOH solution.

### Solids content

The solids content (SC) was determined with the aid of a Mettler type LP16/PM600 infrared drier/weigher. If any polymer was left after the reaction, this was filtered off, prior to determination of the solids content, using a paper filter (MN640m medium retention and filtration speed, supplied by Macherey-Nagel of Germany). Prior thereto, filtering was effected with a metal sieve with meshes 250 µm wide, if necessary. The solids content of the resultant filtrates, that were clear to the eye, was determined in the manner known to those skilled in the art.

### pH measurements

pH values were measured using a Knick 752 Cl, No. 051489 pH meter. The pH meter was calibrated at 20°C with buffer solutions having a pH of 4.00 (citrate Cl-buffer), 7.0 and 9,00 supplied by Merck, and was equipped with a glass electrode (3M KCl). The pH of the samples was determined at 20°C. Samples from comparative experiments were diluted to a solids content of about 10 wt.% if their solids content, and thus viscosity, was any higher. Dispersions were not diluted.

### Determination of degree of imidization

The degree of imidization of the aqueous dispersions can be measured through for example Raman-FTIR spectroscopy by relating the intensity of absorptions to the intensity of the same absorptions measured for a completely imidized and a completely non-imidized reference compound. Before any calculation was made, the signals were normalized to the absorption signals from the aromatic rings in the polymer chains. In conducting the measurements, the following absorption bands were observed:
- C=O band of imides (around 1768 cm-1, relatively strong signal)
- C=O band of anhydrides (around 1860 cm-1)
- C=O band of acid groups (around 1715 cm-1, relatively weak signal).

As reference samples use was made of an aqueous ammonia solution of a polymer made from 26 mol% maleic anhydride and 74 mol% styrene made with an NH3:MA molar ratio of 3:1 at 50°C (no imide groups) and an imidized SMA powder prepared by mixing 2 g of SMA (28 wt.% MA-; 72 wt.% styrene; molecular weight 110,000 g/mol) with 0.50 g of urea in a twin screw extruder for 5 minutes at 240°C, with a speed of 100 revolutions per minute.

### Contact angle measurements

Contact angles were measured using the "Digidrop" contact angle meter supplied by GBX (of Roman, France). 0.5 mg of water was applied onto the sample and the contact angle was measured on the basis of a film of 250 images/sec.

### Materials.

- SMA-I: SMA with an MA content of 26 wt %, styrene content of wt 74 %, and a molecular mass of 80,000 g/mol (SMA sz26080, with a dissolving viscosity of 0.35 dl/g (0.2 g SMA per dl of tetrahydrofuran (THF), 25°C), supplied by DSM of the Netherlands).
- SMA-II: SMA with a molecular mass of 1,000 g/mol with an MA content of 48 wt. % and 52 wt. % styrene. Used in the form of a 15% solution of the K-salt in water (SMA 1000 P Atochem, France).
- SMA-III: SMA with an MA content of 26 wt %, styrene content of wt 74 %, and a molecular mass of 35,000 g/mol (SMA sz26035) (supplied by DSM of the Netherlands).

### Example I

140 g of ground SMA-I and 400 ml water were introduced into a double-walled, oil-heated reactor of 1 litre containing a turbine stirrer and mixed at 500 rpm for 5 minutes. To this was added 25.3 g of a 25 % solution of NH₃, corresponding with a MA:NH₃ molar ratio of 1:1. In addition, a solution of 4.2 g of a potassium salt of SMA-II in 23.8 g water was added. The weight ratio of K salt:SMA = 0.03 :1. Next, the reactor was topped up with water to 700 ml and pressurized with nitrogen to a pressure of 0.2 MPa. The temperature was brought to 160°C and the stirrer speed to 800 rpm. The pressure in the reactor was approx. 0.8 MPa. After about 1 hour the viscosity of the reaction mixture increased enormously, whereafter the viscosity gradually reduced again. After 6 hours a polymer dispersion with a solids content of approx. 20 wt.% had formed, with particles of between 80 and 120 nm; the MA in these particles had completely imidized. The Tg of the polymer was between 190 and 200°C. The pH of the dispersion was 6.8.

### Example II

245 g of ground SMA-I mixed with 300 ml water, to which 0.2 gram of Surfinol from Air Products was added, were introduced into a double-walled, oil-heated reactor of 1 litre containing a turbine stirrer and mixed at 500 rpm for 5 minutes. To this was added a 44.2 g of 25 % solution of NH₃, corresponding with an MA:NH₃ molar ratio of 1:1. In addition, a 49 g of a 15 weight % solution of a potassium salt of an SMA-II in water was added. The weight ratio of K salt : SMA = 0.03 :1. Next, the reactor was topped up with water to 700 ml. The temperature was brought to 160°C and the stirrer speed to 800 rpm. The pressure in the reactor was approx. 0.6 MPa. After 6 hours a polymer dispersion with a solids content of approx. 35 wt.% had formed, with particles of between 80 and 120 nm; the MA in these particles had completely imidized. The Tg of the polymer was between 190 and 200°C. The pH of the dispersion was 6.9.

### Example III

385 g of ground SMA-III mixed with 150 ml water were introduced into a double-walled, oil-heated reactor of 1 litre containing a turbine stirrer and mixed at 500 rpm for 5 minutes. To this was added a 69.5 g of 25 % solution of NH₃, corresponding with an MA: NH₃ molar ratio of 1:1. In addition, a 77.0 g of a 15 weight % solution of a potassium salt of an SMA-II in water was added. The weight ratio of K salt: SMA = 0.03 :1. Next, the reactor was topped up with water to 700 ml. The temperature was brought to 160°C and the stirrer speed to 800 rpm. The pressure in the reactor was approx. 0.6 MPa. After 6 hours a polymer dispersion with a solids content of approx. 55 wt.% had formed, with particles of between 80 and 150 nm; the MA in these particles had completely imidized. The Tg of the polymer was between 180 and 190°C. The pH of the dispersion was 6.9.

The dispersions from all three examples did not exhibit any film-forming properties during drying. In all three cases, the contact angle of the dispersions applied onto paper was smaller than 40°.

### Comparative Experiment A

A dispersion was prepared by introducing into a 10-litre autoclave 1.5 kg of SMA-I, demineralized water and a solution of 25% solution of NH₃. The molar ratio of MA: NH₃ was 1:2. The autoclave content was 7.5 kg. The autoclave was provided with a stirrer and with means of removing samples from the reactor during the reaction. Next, the pressure in the autoclave was increased with N₂ to 0.6 MPa. Stirring was effected at a speed of 210-215 revolutions per minute. The autoclave was heated to 140°C at the rate of 4°C/min, in which process the pressure increased to 1 MPa. After 25 minutes the imidization reaction was stopped by reducing the reaction temperature to 50°C. The degree of imidization achieved proved to be 65%. The solids content of the dispersion was 20 wt. %. The particles of the dispersion formed a film as they were calandered onto paper. The contact angle was 65°.

### Comparative Experiment B

3 kg SMA-I, a KOH solution with a MA : KOH molar ratio of 1: 0.2 and an NH3 solution with MA : NH₃ molar ratio of 1: 0.75 were combined in a 10-litre autoclave. The total mass of starting materials in the autoclave at the beginning of the reaction was about 7.5 kg. The autoclave was provided with a stirrer and with means of removing samples from the reactor during the reaction. Next, the pressure in the autoclave was increased with N₂ to a pressure of 0.4 MPa. Stirring was effected at a speed of 300 revolutions per minute. The autoclave was heated to 140 °C. The pressure increased in that process. After 21.5 hours the reaction was stopped by reducing the reaction temperature to room temperature.

There was obtained a dispersion with a pH of 6.9 and a solids content of 21 wt.%. Particle size approx. 100 nm; the dispersion possessed film-forming properties. The contact angle was 70°.

### Comparative Experiment C

140 g SMA-I, water, 4.6 g of a KOH 45 wt% solution in water, corresponding with a MA: KOH molar ratio of 1: 0.09 and an 24 g of a 25% NH3 solution in water, corresponding with MA : NH₃ molar ratio of 1: 0.95 were combined in a 1-litre autoclave. The amount of water was adjusted so that the total mass of starting materials in the autoclave at the beginning of the reaction was about 700 g kg. The autoclave was provided with a stirrer and with means of removing samples from the reactor during the reaction. Next, the pressure in the autoclave was increased with N₂ to a pressure of 0.2 MPa. Stirring was effected at a speed of 800 revolutions per minute. The autoclave was heated to 160 °C. The pressure increased in that process. After 6 hours the reaction was stopped by reducing the reaction temperature to room temperature.

There was obtained a dispersion with a pH of 7.0 and a solids content of 20 wt.%. The dispersion had a bimodal particle distribution. Particle size approx. 120 nm; the dispersion possessed film-forming properties.

The contact angles of the coatings prepared with the dispersions according to the invention are substantially smaller than those prepared with the known dispersions. This demonstrates that with the dispersions according to the invention it is possible to produce a coating having much faster water removal than a coating prepared with a known dispersion.

## Claims

1. Process for preparing an aqueous dispersion of a polymer, which polymer is obtained by dispersing or dissolving a starting polymer containing anhydride monomer units and vinyl aromatic monomer units in an aqueous solution of NH₃ or an amine and subjecting the starting polymer to an imidization reaction, **characterized in that** the imidization reaction is carried out in the presence of an alkali salt of an acid functional polymer containing acid functional monomer units and vinyl aromatic monomer units with a temperature at which and a time period during which the reaction is carried out being so chosen that at least 80% imidization, relative to the anhydride monomers in the starting polymer, is achieved.

2. Process according to Claim 1, wherein the starting polymer is copolymer of an α-β-unsaturated dicarboxylic anhydride and an aromatic vinyl monomer

3. Process according to Claim 2, wherein the starting polymer contains 18-50 mol% of maleic anhydride monomer units and 50-82 mol% of vinyl aromatic monomer units.

4. Process according to any one of Claims 1-3, wherein the molecular mass of the starting polymer is between 20,000 and 300,000 g/mol.

5. Process according to any one of Claims 1-4, wherein the molar ratio between NH₃ or the amine and the anhydride monomer units in the starting polymer is 0.8-1.

6. Process according to any one of Claims 1-5, wherein the acid functional polymer is copolymer of vinyl aromatic monomers and α-β-unsaturated dicarboxylic acid monomers, or the anhydride thereof.

7. Process according to Claim 6, wherein the acid functional polymer is a styrene maleic anhydride copolymer (SMA) with a molecular mass of from 500 to 150.000 g/mol.

8. Process according to any one of Claims 1-7, wherein the alkali salt is a potassium salt.

9. Aqueous dispersion of a polymer containing imide functional groups, vinyl aromatic monomer units, and optionally anhydride monomer units, **characterized in that** the ratio of imide functional groups to anhydride monomer units is at least 9:1.

10. Aqueous dispersion of a polymer containing imide functional groups, vinyl aromatic monomer units, and optionally anhydride monomer units, **characterized in that** the ratio of imide functional groups to anhydride monomer units is at least 4:1 and the dispersion has a solids content of at least 30 wt %.

11. Aqueous dispersion of a polymer containing maleic anhydride (MA) monomer units and vinyl aromatic monomer units, **characterized in that** the MA is virtually completely imidized and the dispersion has a solids content of more than 30 wt.%.

12. Aqueous dispersion according to any of Claims 9-11, wherein the vinyl aromatic monomer units are styrene and the Tg of the polymer is more than 160°C.

13. Composition for paper sizing or paper coating containing an aqueous dispersion according to any of claims 9-12 and one or more customary additives.

14. Use of the composition for paper sizing or paper coating according to Claim 13 for the preparation of coated paper.

15. Paper coated with a composition according to claim 13.
